# EUROPEAN PATENT APPLICATION

(11) **EP 4 357 966 A1**
(43) Date of publication of application: **24.04.2024**
(21) Application number: 23185528.9
(22) Date of filing: 14.07.2023
(51) Int. Cl.: G06F 40/279, G06F 40/289, G06F 40/30, G06N 20/00

(54) **INFORMATION PROCESSING PROGRAM, INFORMATION PROCESSING METHOD, AND INFORMATION PROCESSING DEVICE**

(30) Priority: 17.10.2022 JP 2022166303
(71) Applicant: FUJITSU LIMITED, Kawasaki-shi, Kanagawa 211-8588 (JP)
(72) Inventor: Liang, Jun, Kawasaki-shi, Kanagawa, 211-8588 (JP)
(74) Representative: Hoffmann Eitle

(57) **Abstract**

An information processing program including instructions which, when executed by a computer, cause the computer to execute processing including: selecting a sentence of a second vector similar to a first vector, based on the first vector of a sentence that belongs to a first domain and the second vector of a sentence that belongs to a second domain; determining whether or not the selected sentence is the sentence that belongs to the first domain, by inputting the selected sentence into a classifier trained by using the sentence that belongs to the first domain; and extracting the sentence that belongs to the first domain, from among a plurality of the selected sentences, based on a determination result.

## Description

### FIELD

The embodiment discussed herein is related to an information processing program or the like.

### BACKGROUND

In natural language processing, there is a technology called domain adaptation. For example, the domain adaptation is a technology for addressing an issue for reducing a domain shift between samples of a Source domain and a Target domain.

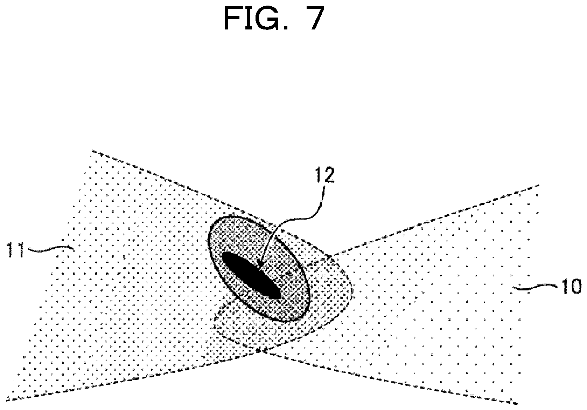

FIG. 7 is a diagram illustrating an example of a data distribution on a domain. In the example illustrated in FIG. 7, data 10 of Original language model (LM) domain, data 11 of Target domain, and data 12 of Target domain downstream task are included in a space.

The data 10 of the Original LM domain corresponds to data of a sentence existing on the Internet. The data 11 of the Target domain is corpus data of the Target domain. The data 12 of the Target domain downstream task is data of a sentence selected to execute a downstream task.

Hereinafter, an example of related art of the domain adaptation using the data 10 of the Original LM domain, the data 11 of the Target domain, and the data 12 of the Target domain downstream task will be described.

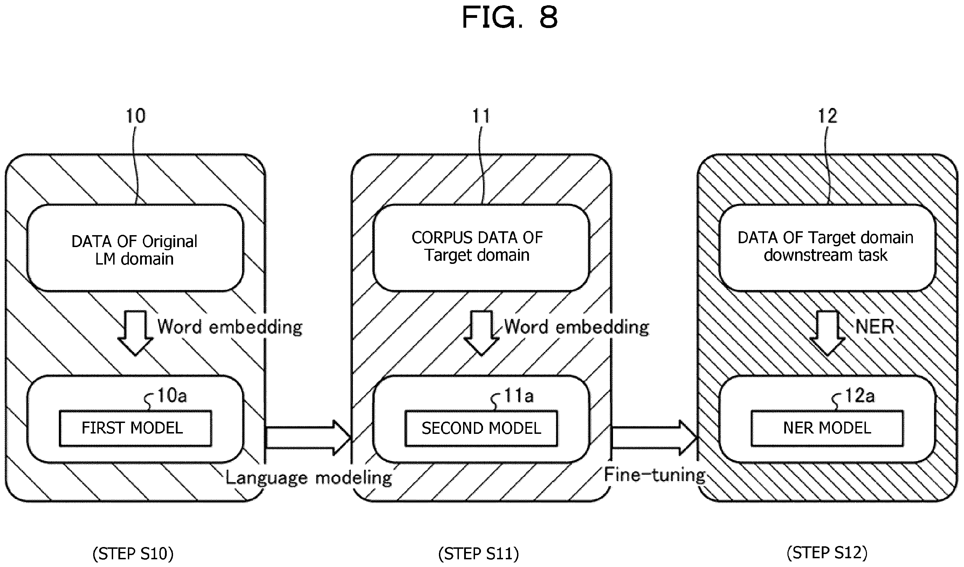

FIG. 8 is a diagram for explaining the related art of the domain adaptation. For example, in the domain adaptation in the related art, processing is executed in order of step S10, step S11, and step S12. A typical device that performs the domain adaptation is referred to as a typical device.

The typical device performs training of a first model 10a (Pretrained language model) using the data 10 of the Original LM domain in step S10. The first model 10a is a natural language processing model. The first model 10a is a neural network (NN) or the like. For example, when a sentence is input to the first model 10a, a vector of each word included in the sentence is output.

The typical device obtains a second model 11a (Re-pretrained language model) by performing retraining of the first model 10a, using the data 11 of the Target domain, in step S11.

The typical device couples the second model 11a to a name entity recognition (NER) model 12a and performs Fine-tuning on the second model 11a and the NER model 12a, using the data 12 of the Target domain downstream task, in step S12. The NER model 12a is a classification model. The NER model 12a is a NN or the like.

In steps S10 and S11, correct answer labels are not assigned to the data 10 of the Original LM domain and the data 11 of the Target domain, and unsupervised training is performed. In step S12, a correct answer label is assigned to the data 12 of the Target domain downstream task, and supervised training is performed.

Here, a performance of the downstream task can be enhanced as more sentences among the plurality of sentences included in the data 11 of the Target domain are sentences related to the downstream task. For example, in the related art, a sentence related to the downstream task is selected from among the plurality of sentences included in the data 11 of the Target domain by a data selection method based on Bag-of-words. A typical device that performs data selection based on the Bag-of-words is also referred to as a typical device.

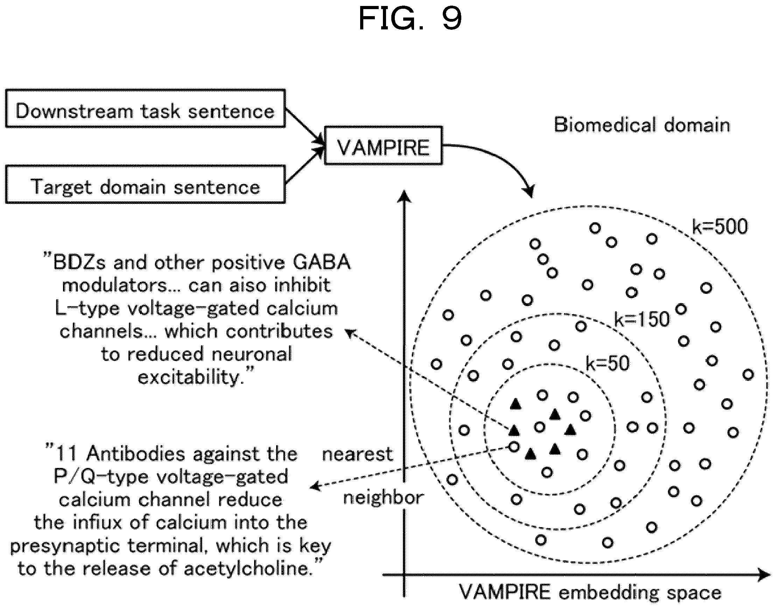

FIG. 9 is a diagram for explaining the data selection method based on the Bag-of-words. The typical device converts a Downstream task sentence into a vector with VAMPIRE or the like and disposes the vector in a VAMPIRE embedding space. The Downstream task sentence is data of the sentence included in the data 12 of the Target domain downstream task. The typical device similarly executes the processing described above on another Downstream task sentence. Each Downstream task sentence on the VAMPIRE embedding space is represented by a "triangle".

The typical device converts a Target domain sentence into a vector by the VAMPIRE and disposes the vector in the VAMPIRE embedding space. The Target domain sentence is data of the sentence included in the data 11 of the Target domain. The typical device similarly executes the processing described above on another Target domain sentence. Each Target domain sentence on the VAMPIRE embedding space is represented by a "circle".

The typical device measures a similarity between the Downstream task sentence and the Target domain sentence on the VAMPIRE embedding space and selects Top-k Target domain sentences. In the example illustrated in FIG. 9, each Target domain sentence included in a circle of k = 50 is selected as the sentence related to the downstream task.

Suchin Gururangan et al., "Don't Stop Pretraining: Adapt Language Models to Domains and Tasks" continarXiv: 2004.10964v3 [cs.CL] 5 May 2020 is disclosed as related art.

### SUMMARY

### TECHNICAL PROBLEM

However, the related art described above has a problem in that a Target domain sentence that is not related to a Downstream task sentence is selected.

In the data selection method based on the Bag-of-words, context information of a sentence is not considered, and a sentence is selected according to the similarity on the VAMPIRE embedding space. Therefore, the sentence selected by the data selection method based on the Bag-of-words is often a noise that is not related to the Downstream task sentence.

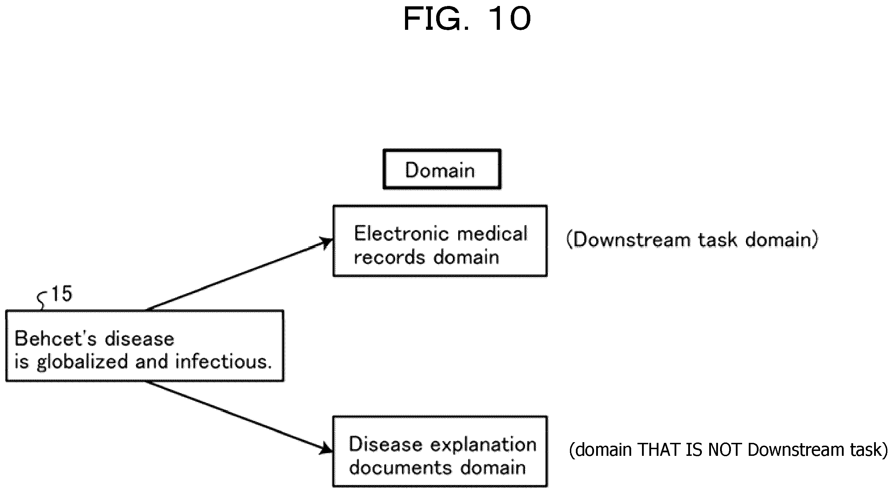

FIG. 10 is a diagram for explaining a problem of the related art. In the example in FIG. 10, a Downstream task domain is set as an "Electronic medical records domain", and a domain that is not the Downstream task is set as a "Disease explanation documents domain". A sentence 15 is set as "Behcet's disease is globalized and infectious.".

For example, the sentence 15 is similar to a sentence of the "Electronic medical records domain" and is also similar to a sentence of "Disease explanation documents domain", on the VAMPIRE embedding space.

In a case where context information of the sentence 15 is different from context information of the "Electronic medical records domain", when the sentence 15 is selected by the data selection method based on the Bag-of-words, the selected sentence 15 is assumed as a noise.

In other words, it is requested to remove a noise that is not related to a specific domain such as the Downstream task and select data related to the specific domain.

In one aspect, an object of the embodiment is to provide an information processing program, an information processing method, and an information processing device that can select data related to a Downstream task while removing a noise that is not related to the Downstream task.

### SOLUTION TO PROBLEM

According to an aspect of the embodiments, there is provided an information processing program including instructions which, when executed by a computer, cause the computer to execute processing including: selecting a sentence of a second vector similar to a first vector, based on the first vector of a sentence that belongs to a first domain and the second vector of a sentence that belongs to a second domain; determining whether or not the selected sentence is the sentence that belongs to the first domain, by inputting the selected sentence into a classifier trained by using the sentence that belongs to the first domain; and extracting the sentence that belongs to the first domain, from among a plurality of the selected sentences, based on a determination result.

### ADVANTAGEOUS EFFECTS OF INVENTION

It is possible to remove a noise that is not related to a specific domain and select data related to the specific domain.

### BRIEF DESCRIPTION OF DRAWINGS

FIG. 1 is a diagram (1) for explaining processing of an information processing device according to the present embodiment;
FIG. 2 is a diagram (2) for explaining the processing of the information processing device according to the present embodiment;
FIG. 3 is a diagram for explaining an effect of the information processing device according to the present embodiment;
FIG. 4 is a functional block diagram illustrating a configuration of the information processing device according to the present embodiment;
FIG. 5 is a flowchart illustrating a processing procedure of the information processing device according to the present embodiment;
FIG. 6 is a diagram illustrating an example of a hardware configuration of a computer that implements functions similar to those of the information processing device according to the embodiment;
FIG. 7 is a diagram illustrating an example of a data distribution on a domain;
FIG. 8 is a diagram for explaining related art of domain adaptation;
FIG. 9 is a diagram for explaining a data selection method based on Bag-of-words; and
FIG. 10 is a diagram for explaining a problem of related art.

### DESCRIPTION OF EMBODIMENTS

Hereinafter, embodiments of an information processing program, an information processing method, and an information processing device disclosed in the present application will be described in detail with reference to the drawings. Note that the present embodiment does not limit the present **invention.**

### [Embodiment]

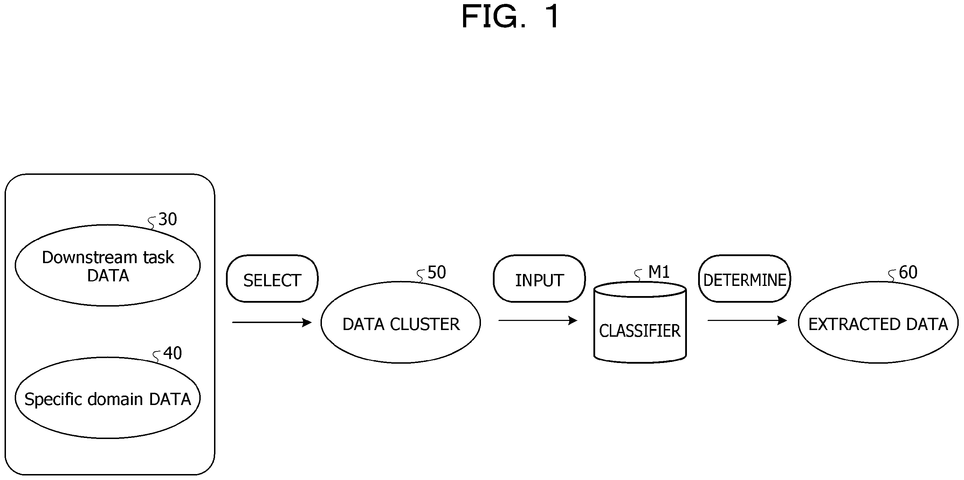

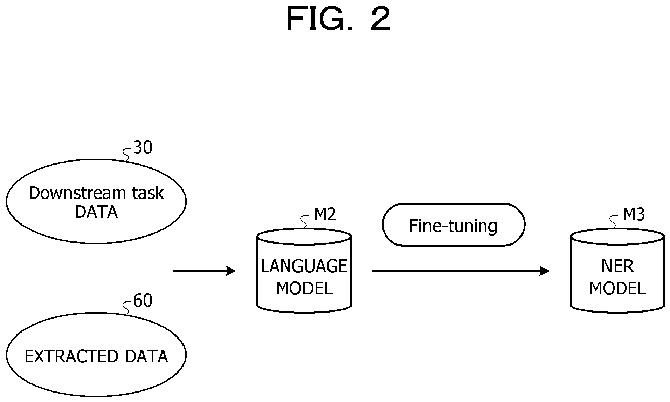

FIGs. 1 and 2 are diagrams for explaining processing of an information processing device according to the present embodiment. First, FIG. 1 will be described. The information processing device executes data selection based on Bag-of-words based on Downstream task data 30 and Specific Domain data 40.

For example, the Downstream task data 30 is data corresponding to data 12 of a Target domain downstream task described with reference to FIG. 7. The Specific Domain data 40 is data corresponding to data 11 of a Target domain described with reference to FIG. 7.

In the present embodiment, description will be made as assuming that a granularity of data to be processed by the information processing device as a "sentence". However, the processing may be executed with a granularity of a "text".

The data selection based on Bag-of-words, executed by the information processing device, will be described. The information processing device converts each sentence included in the Downstream task data 30 into a vector by VAMPIRE or the like and disposes the vector in a VAMPIRE embedding space. The vector of the sentence included in the Downstream task data 30 is referred to as a "first vector".

The information processing device converts each sentence included in the Specific Domain data 40 into a vector by VAMPIRE or the like and disposes the vector in the VAMPIRE embedding space. The vector of the sentence included in the Specific Domain data 40 is referred to as a "second vector".

The information processing device calculates a similarity between each first vector and each second vector in the VAMPIRE embedding space and selects the sentence of the second vector similar to the first vector. For example, as in the processing described with reference to FIG. 9, the information processing device selects the sentence of the second vector similar to the first vector. Note that the information processing device may select a sentence of the second vector of which a distance from an average vector of the first vector is less than a threshold.

The information processing device registers each sentence of the Downstream task data 30 and the sentence selected through the data selection based on the Bag-of-words, in a data cluster 50.

Subsequently, the information processing device inputs a sentence included in the data cluster 50 into a classifier M1, and determines whether or not the sentence input into the classifier M1 is a sentence that belongs to the Downstream task data 30, based on output data of the classifier M1.

For example, the output data of the classifier M1 includes a value of certainty indicating that the sentence input into the classifier M1 is the sentence of the Downstream task data 30. In the following description, the value of the certainty indicating that the sentence input into the classifier M1 is the sentence of the Downstream task data 30 (sentence belonging to domain of Downstream task data 30) is referred to as a "likelihood".

In a case where the likelihood of the output data of the classifier M1 is equal to or more than a threshold, the information processing device determines that the sentence input into the classifier M1 is the sentence belonging to the Downstream task data 30. The information processing device repeatedly executes the processing described above for each sentence included in the data cluster 50. The information processing device extracts the sentence that is determined as the sentence belonging to the Downstream task data 30, from among the sentences included in the data cluster 50 and sets the sentence as extracted data 60.

Here, the classifier M1 is a classifier that has been trained in advance, based on each sentence of the Downstream task data 30. The classifier M1 is a NN or the like. For example, a training dataset used in a case where the classifier M1 is trained includes a plurality of pieces of training data. To the training data, a pair of input data and a label is set. The input data is data of a sentence. As the label, "1" is set in a case where the sentence of the input data is the sentence belonging to the Downstream task data 30. On the other hand, as the label, "0" is set in a case where the sentence of the input data is a sentence that does not belong to the Downstream task data 30.

Next, description proceeds to FIG. 2. The information processing device performs training of a language model M2 based on each sentence of the Downstream task data 30 and the extracted data 60. The language model M2 is a bidirectional encoder representations from transformers (BERT) or the like.

The information processing device couples the language model M2 to a name entity recognition (NER) model M3. An output result of the language model M2 is input into the NER model M3, and a classification result is output from the NER model M3. The information processing device performs Fine-tuning on the language model M2 and the NER model M3. For example, when a sentence is input into the language model M2, a label of each word included in the sentence is output from the NER.

As described above, according to the information processing device according to the present embodiment, the sentence selected based on the Bag-of-words is input into the trained classifier M1, and it is determined whether or not the selected sentence is the sentence belonging to the Downstream task data 30. The information processing device extracts the sentence belonging to the Downstream task data 30, from among the selected sentences. As a result, it is possible to remove a noise that is not related to the Downstream task and select data related to the Downstream task.

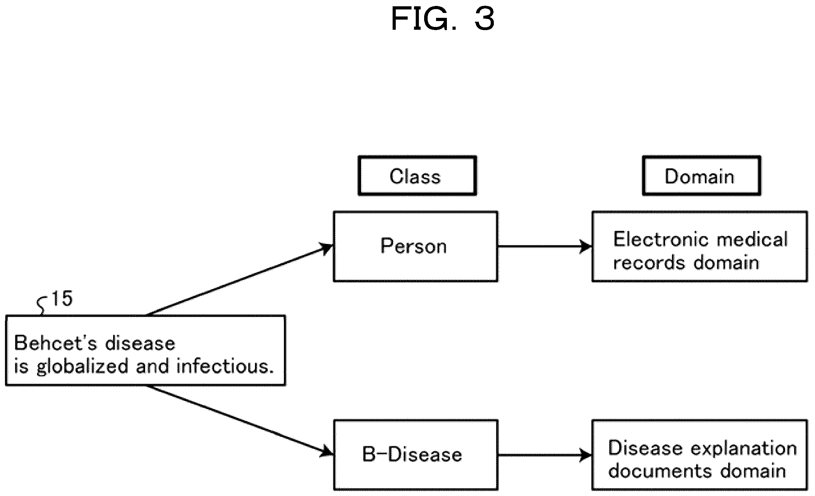

FIG. 3 is a diagram for explaining an effect of the information processing device according to the present embodiment. In the example in FIG. 3, a Downstream task domain is set as an "Electronic medical records domain", and a domain that is not the Downstream task is set as a "Disease explanation documents domain". A sentence 15 is set as "Behcet's disease is globalized and infectious.".

For example, the sentence 15 is similar to a sentence of the "Electronic medical records domain" and is also similar to a sentence of "Disease explanation documents domain", on the VAMPIRE embedding space. As described with reference to FIG. 10, in a case where the context information of the sentence 15 is different from the context information of the "Electronic medical records domain", when the sentence 15 is selected as it is by the data selection method based on the Bag-of-words, the selected sentence 15 is assumed as a noise.

On the other hand, the information processing device according to the present embodiment inputs the sentence 15 into the classifier M1 and determines whether or not the sentence 15 is a sentence belonging to the "Electronic medical records domain". For example, if the sentence 15 is the sentence belonging to the "Electronic medical records domain", by selecting the sentence 15, it is possible to give a positive influence on the Downstream task Domain. On the other hand, if the sentence 15 is a sentence that does not belong to the "Electronic medical records domain", by not selecting the sentence 15, it is possible to prevent a negative influence from being given to the Downstream task Domain.

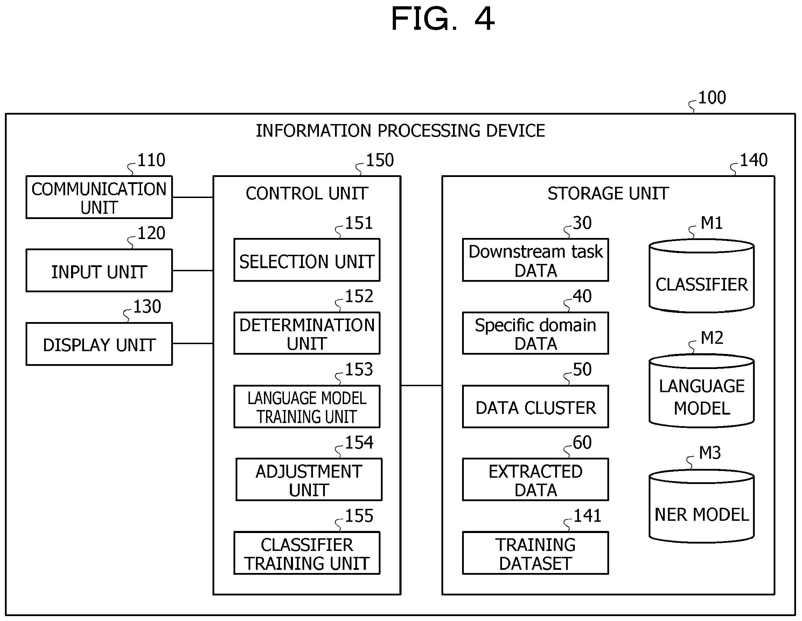

Next, a configuration example of the information processing device that executes the processing illustrated in FIGs. 1 and 2 will be described. FIG. 4 is a functional block diagram illustrating a configuration of the information processing device according to the present embodiment. As illustrated in FIG. 4, an information processing device 100 includes a communication unit 110, an input unit 120, a display unit 130, a storage unit 140, and a control unit 150.

The communication unit 110 performs data communication with an external device or the like via a network. The control unit 150 to be described later exchanges data with an external device via the communication unit 110.

The input unit 120 is an input device that inputs various types of information into the control unit 150 of the information processing device 100. The input unit 120 corresponds to a keyboard, a mouse, a touch panel, or the like.

The display unit 130 is a display device that displays information output from the control unit 150.

The storage unit 140 includes the Downstream task data 30, the Specific Domain data 40, the data cluster 50, the extracted data 60, and a training dataset 141. Furthermore, the storage unit 140 includes the classifier M1, the language model M2, and the NER model M3. The storage unit 140 is a storage device such as a memory.

The description regarding the Downstream task data 30, the Specific Domain data 40, the data cluster 50, and the extracted data 60 is similar to that of the Downstream task data 30, the Specific Domain data 40, the data cluster 50, and the extracted data 60 described with reference to FIG. 1.

The description regarding the classifier M1 is similar to the description regarding the classifier M1 described with reference to FIG. 1. The description regarding the language model M2 and the NER model M3 is similar to the description regarding the language model M2 and the NER model M3 described with reference to FIG. 2.

The training dataset 141 is data used in a case where the classifier M1 is trained. The training dataset 141 includes a plurality of pieces of training data. To the training data, a pair of input data and a label is set. The input data is data of a sentence. As the label, "1" is set in a case where the sentence of the input data is the sentence belonging to the Downstream task data 30. On the other hand, as the label, "0" is set in a case where the sentence of the input data is a sentence that does not belong to the Downstream task data 30.

The control unit 150 includes a selection unit 151, a determination unit 152, a language model training unit 153, an adjustment unit 154, and a classifier training unit 155. The control unit 150 is a central processing unit (CPU), a graphics processing unit (GPU), or the like.

The selection unit 151 performs the data selection based on the Bag-of-words, based on the Downstream task data 30 and the Specific Domain data 40.

For example, the selection unit 151 converts each sentence included in the Downstream task data 30 into the first vector by the VAMPIRE or the like. The selection unit 151 converts each sentence included in the Specific Domain data 40 into the second vector by the VAMPIRE or the like.

The selection unit 151 calculates a similarity between each first vector and each second vector in the VAMPIRE embedding space and selects a sentence of the second vector similar to the first vector. The selection unit 151 registers each sentence of the Downstream task data 30 and the sentence selected through the data selection based on the Bag-of-words, in the data cluster 50.

The determination unit 152 inputs the sentence included in the data cluster 50 into the trained classifier M1 and determines whether or not the sentence input into the classifier M1 is a sentence belonging to the Downstream task data 30, based on the output data of the classifier M1.

In a case where the likelihood of the output data of the classifier M1 is equal to or more than the threshold, the determination unit 152 determines that the sentence input into the classifier M1 is the sentence belonging to the Downstream task data 30. The determination unit 152 repeatedly executes the processing described above for each sentence included in the data cluster 50. The determination unit 152 extracts the sentence that is determined as the sentence belonging to the Downstream task data 30, from among the sentences included in the data cluster 50 and sets the sentence as extracted data 60.

The language model training unit 153 performs learning (training) of the language model M2, based on each sentence of the Downstream task data 30 and each sentence of the extracted data 60.

The adjustment unit 154 performs Fine-tuning on the language model M2 and the NER model M3, using the Downstream task data 30.

The classifier training unit 155 trains the classifier M1, based on the training dataset 141. The classifier training unit 155 inputs the input data into the classifier M1 based on the error back propagation method, and trains the classifier M1 so that an error between the output of the classifier M1 and the label decreases.

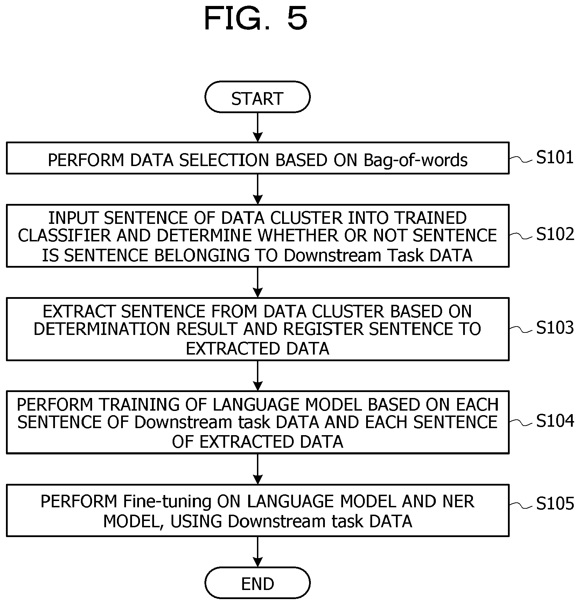

Next, an example of a processing procedure of the information processing device 100 according to the present embodiment will be described. FIG. 5 is a flowchart illustrating the processing procedure of the information processing device according to the present embodiment. As illustrated in FIG. 5, the selection unit 151 of the information processing device 100 performs the data selection based on the Bag-of-words, based on the Downstream task data 30 and the Specific Domain data 40 (step S101).

The determination unit 152 of the information processing device 100 inputs the sentence of the data cluster 50 into the trained classifier M1 and determines whether or not the sentence is the sentence belonging to the Downstream task data 30 (step S102). The determination unit 152 extracts the sentence from the data cluster 50 based on the determination result and registers the sentence to the extracted data 60 (step S103).

The language model training unit 153 of the information processing device 100 performs learning (training) of the language model M2, based on each sentence of the Downstream task data 30 and each sentence of the extracted data 60 (step S104).

The adjustment unit 154 of the information processing device 100 performs Fine-tuning on the language model M2 and the NER model M3, using the Downstream task data 30 (step S105).

Next, an effect of the information processing device 100 according to the present embodiment will be described. The information processing device 100 inputs the sentence selected based on the Bag-of-words into the trained classifier M1 and determines whether or not the selected sentence is the sentence belonging to the Downstream task data 30. The information processing device 100 extracts the sentence belonging to the Downstream task data 30 from among the selected sentences. As a result, it is possible to remove the noise that is not related to the specific domain such as the Downstream task and select data related to the specific domain.

The information processing device 100 trains the classifier M1, based on the training dataset 141. As a result, it can be determined whether or not the sentence selected based on the Bag-of-words is the sentence belonging to the Downstream task data 30.

The information processing device 100 inputs the sentence selected based on the Bag-of-words into the trained classifier M1, and in a case where the likelihood output from the classifier M1 is equal to or more than the threshold, the information processing device 100 determines whether or not the target sentence is the sentence belonging to the Downstream task data 30. As a result, it is possible to efficiently determine whether or not the sentence is the sentence belonging to the Downstream task data 30.

The information processing device 100 extracts the sentence belonging to the Downstream task data 30, using the classifier M1, from among the sentences selected based on the Bag-of-words and trains the language model M2 using the extracted sentence. As a result, the language model M2 can be trained by an amount of the removed noise, and a performance of the Downstream task can be enhanced.

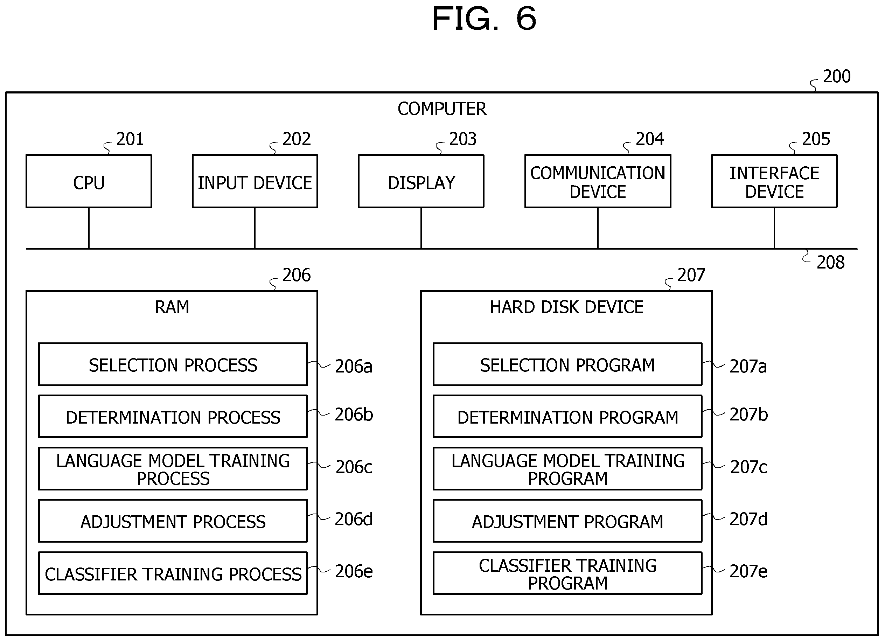

Next, an example of a hardware configuration of a computer that implements functions similar to those of the information processing device 100 described above will be described. FIG. 6 is a diagram illustrating an example of the hardware configuration of the computer that implements the functions similar to those of the information processing device according to the embodiment.

As illustrated in FIG. 6, a computer 200 includes a CPU 201 that executes various types of arithmetic processing, an input device 202 that receives data input from a user, and a display 203. Furthermore, the computer 200 includes a communication device 204 that exchanges data with an external device or the like via a wired or wireless network, and an interface device 205. Furthermore, the computer 200 includes a random access memory (RAM) 206 that temporarily stores various types of information, and a hard disk device 207. Additionally, each of the devices 201 to 207 is coupled to a bus 208.

The hard disk device 207 includes a selection program 207a, a determination program 207b, a language model training program 207c, an adjustment program 207d, and a classifier training program 207e. Furthermore, the CPU 201 reads each of the programs 207a to 207e, and loads the read program to the RAM 206.

The selection program 207a functions as a selection process 206a. The determination program 207b functions as a determination process 206b. The language model training program 207c functions as a language model training process 206c. The adjustment program 207d functions as an adjustment process 206d. The classifier training program 207e functions as a classifier training process 206e.

Processing of the selection process 206a corresponds to the processing of the selection unit 151. Processing of the determination process 206b corresponds to the processing of the determination unit 152. Processing of the language model training process 206c corresponds to the processing of the language model training unit 153. Processing of the adjustment process 206d corresponds to the processing of the adjustment unit 154. Processing of the classifier training process 206e corresponds to the processing of the classifier training unit 155.

Note that each of the programs 207a to 207e does not necessarily have to be stored in the hard disk device 207 from the beginning. For example, each of the programs is stored in a "portable physical medium" to be inserted into the computer 200, such as a flexible disk (FD), a compact disc read only memory (CD-ROM), a digital versatile disc (DVD), a magneto-optical disk, or an integrated circuit (IC) card. Then, the computer 200 may read and execute each of the programs 207a to 207e.

## Claims

1. An information processing program comprising instructions which, when executed by a computer, cause the computer to execute processing comprising:
selecting a sentence of a second vector similar to a first vector, based on the first vector of a sentence that belongs to a first domain and the second vector of a sentence that belongs to a second domain;
determining whether or not the selected sentence is the sentence that belongs to the first domain, by inputting the selected sentence into a classifier trained by using the sentence that belongs to the first domain; and
extracting the sentence that belongs to the first domain, from among a plurality of the selected sentences, based on a determination result.

2. The information processing program according to claim 1, the processing further comprising: training the classifier by using a pair of input data of one sentence and a label that indicates whether or not the one sentence is the sentence that belongs to the first domain as training data.

3. The information processing program according to claim 1, wherein in a case where a sentence is input, the classifier outputs a likelihood that the input sentence is the sentence that belongs to the first domain, and in a case where the likelihood output when the selected sentence is input into the classifier is equal to or more than a threshold, the processing of determining determines that the selected sentence is the sentence that belongs to the first domain.

4. The information processing program according to claim 1, the processing further comprising: training a language model, based on the sentence extracted through the processing of extracting and the sentence that belongs to the first domain.

5. An information processing method implemented by a computer, the information processing method comprising:
selecting a sentence of a second vector similar to a first vector, based on the first vector of a sentence that belongs to a first domain and the second vector of a sentence that belongs to a second domain;
determining whether or not the selected sentence is the sentence that belongs to the first domain, by inputting the selected sentence into a classifier trained by using the sentence that belongs to the first domain; and
extracting the sentence that belongs to the first domain, from among a plurality of the selected sentences, based on a determination result.

6. An information processing apparatus comprising a control unit configured to perform processing including:
selecting a sentence of a second vector similar to a first vector, based on the first vector of a sentence that belongs to a first domain and the second vector of a sentence that belongs to a second domain;
determining whether or not the selected sentence is the sentence that belongs to the first domain, by inputting the selected sentence into a classifier trained by using the sentence that belongs to the first domain; and
extracting the sentence that belongs to the first domain, from among a plurality of the selected sentences, based on a determination result.
